## Europäisches Patentamt

## European Patent Office

## Office européen des brevets

(19)

(11) Veröffentlichungsnummer: **0 073 046**
**B1**

(12) # EUROPÄISCHE PATENTSCHRIFT

(45) Veröffentlichungstag der Patentschrift:
**20.04.88**

(21) Anmeldenummer: **82107664.3**

(22) Anmeldetag: **21.08.82**

(51) Int. Cl.⁴: **C 08 J  5/18,** C 08 L  27/06,
**B 29 D  7/00**

(54) Verfahren zur Herstellung einer Polyvinylchlorid-Folie mit speziellen Eigenschaften.

(30) Priorität: **25.08.81  DE 3133507**

(43) Veröffentlichungstag der Anmeldung:
**02.03.83 Patentblatt 83/9**

(45) Bekanntmachung des Hinweises auf die Patenterteilung:
**20.04.88 Patentblatt 88/16**

(84) Benannte Vertragsstaaten:
**BE DE FR GB IT NL**

(56) Entgegenhaltungen:
**DE - A - 1 815 891**
**DE - A - 2 716 853**
**DE - A - 2 910 042**
**GB - A - 883 396**
**US - A - 3 842 152**

(73) Patentinhaber: **HOECHST AKTIENGESELLSCHAFT,**
**Postfach 80 03 20, D-6230 Frankfurt am Main 80 (DE)**

(72) Erfinder: **Zentner, Erich, Zwieselweg 10,**
**D-8261 Burgkirchen/Alz (DE)**
Erfinder: **Bingemann, Wilhelm, Lohmühlweg 19,**
**D-6200 Wiesbaden (DE)**

## Beschreibung

Die Erfindung betrifft ein Verfahren zur Herstellung einer Polyvinylchlorid-Folie mit speziellen Eigenschaften, bei dem von einer im wesentlichen aus Vinylchlorid-Polymerisat, Gleitmittel und Stabilisator bestehenden Formmasse eine mit Hilfe eines aus mindestens drei Walzen bestehenden Kalanders kalandrierte, gestreckte und mit einer oder mehreren Mattierungswalzen mattierte Folie hergestellt wird.

Es sind zwar Polyvinylchlorid-Folien bekannt, die gestreckt sind und eine mattierte (matte und rauhe) Oberfläche besitzen, sie weisen jedoch nicht jene Kombination von physikalischen und optischen Eigenschaften auf, die für Kontaktverpackungszwecke wie das Umhüllen von regelmässigen oder unregelmässigen Körpern, beispielsweise Flaschen mit Bauch und Hals (Wein-, Sekt-, Likörflaschen und dergleichen) oder zylinderförmige Konserven und Dosen, in der Regel gefordert werden.

Aus den beiden deutschen Offenlegungsschriften 2 910 042 und 2 920 986 sind hoch verstreckte und damit hoch wärmeschrumpfbare Folien auf der Basis von Polyvinylchlorid bekannt, die für Kontaktverpackungszwecke geeignet sind. Sie besitzen jedoch ein relativ hochglänzendes Aussehen und nicht jene Oberflächenbeschaffenheit hinsichtlich Mattigkeit und Rauhigkeit, die aus optischen und ästhetischen Gründen häufig gewünscht wird. Diese Folien weisen zwar ferner in der Querrichtung einen hohen Wärmeschrumpf auf, sie besitzen aber auch einen relativ hohen Schrumpf in der Längsrichtung der Folie, der sich bei vielen Kontaktverpackungen nachteilig auswirkt.

Polyvinylchlorid-Folien für Kontaktverpackungszwecke sollten insbesondere eine bestimmte Rauhigkeit und einen bestimmten Glanz aufweisen, sowie einen definierten Schrumpf (Massänderung) in Querrichtung (das heisst quer zur Laufrichtung der Folie bei ihrer Herstellung), aber keinen nennenswerten Schrumpf in Längsrichtung (das ist die Laufrichtung der Folie bei ihrer Herstellung oder die Maschinenrichtung) beim Erhitzen der Folie. Zur Schrumpfung für die Kontaktverpackung wird die Folie im allgemeinen bis auf 140 °C, vorzugsweise auf mindestens 90 °C erhitzt.

Aus dem deutschen Gebrauchsmuster 7 931 547 ist eine biaxial gestreckte (orientierte) und geprägte Polyvinylchlorid-Folie bekannt. Diese Folie dient zur Herstellung von Klebebändern und braucht deswegen keine besonderen optischen Eigenschaften aufzuweisen.

In der deutschen Offenlegungsschrift 2 833 982 wird ein Verfahren zum Prägen von Folien von einer im wesentlichen aus Vinylchloridpolymerisat, Gleitmittel und Stabilisator bestehenden Formmasse zur Erzielung einer gleichmässig matten und rauhen Folienoberfläche beschrieben. Die Prägung der Folie, die von einer Folienproduktionseinrichtung wie Kalander, Flachdüsenextruder und Runddüsenextruder mit Flachlegeeinrichtung, oder von einer Folienstreck- oder Folienziehvorrichtung stammen kann, erfolgt mit Hilfe einer sandgestrahlten (mattierten) Stahlwalze.

Aus der deutschen Offenlegungsschrift 2 716 853 ist eine Folie mit matter und rauher Oberfläche bekannt, die dadurch erhalten wird, dass eine Formmasse aus a) 10 bis 40 Gew.-% von einem Vinylchloridpolymerisat mit einem gewichtsmittleren Molekulargewicht von 110 000 bis 190 000, b) 60 bis 90 Gew.-% von einem Vinylchloridpolymerisat mit einem gewichtsmittleren Molekulargewicht von 45 000 bis 75 000, und c) üblichen Stabilisatoren und Gleitmitteln durch Rollknet-Kalandrierung zu einer Folie gewalzt wird.

Gemäss der deutschen Auslegeschrift 1 504 522 wird eine matte und rauhe Oberfläche bei thermoplastischen Folien dadurch erreicht, dass man von einer Formmasse ausgeht, die feste und unlösliche Teilchen wie Calciumcarbonatteilchen enthält, aus der Formmasse eine Folie formt und die Folie in Längs- und/oder Querrichtung streckt.

In der deutschen Patentschrift 2 434 726 ist schliesslich ein Verfahren zur Herstellung von oberflächenstrukturfreien und geringen Schrumpf aufweisenden thermoplastischen Hartfolien auf der Basis von Polyvinylchlorid beschrieben, bei dem eine nach dem Kalanderverfahren hergestellte Polyvinylchlorid-Hartfolie mit einer Dicke von 100 bis 1000 µ einer Verstreckung in Querrichtung unterworfen wird. Die Querverstreckung erfolgt dadurch, dass die Folie auf 130 bis 180 °C erwärmt und während der Verstreckung um 0,5 bis 15 °C abgekühlt wird, und ein Querstreckverhältnis von 1,2 bis 2 eingehalten wird.

Die bekannten Polyvinylchlorid-Folien weisen nicht jene spezielle Eigenschaftskombination auf, die für die eingangs erwähnten Anwendungen oft gewünscht wird. In der deutschen Auslegeschrift 1 504 522 und in der deutschen Patentschrift 2 434 726 wird darüber hinaus hervorgehoben, dass man bei thermoplastischen Kunststoff-Folien durch Strecken wohl eine Verbesserung der Festigkeitswerte erreicht, dabei aber immer in Kauf genommen werden muss, eine Folie mit einer glatten, glänzenden und strukturfreien Oberflächenbeschaffenheit zu erhalten, auch wenn die Folie vor dem Verstrecken glanzlos und strukturbehaftet war.

Die Aufgabe der Erfindung besteht nun darin, das eingangsgenannte Verfahren so zu gestalten, dass eine Folie erhalten wird, deren Oberfläche eine bestimmte Rauhigkeit und gleichzeitig auch einen bestimmten Glanz aufweist, und die eine bestimmte Massänderung (Schrumpf) in der Querrichtung, aber keine nennenswerte Massänderung in der Längsrichtung der Folie bei ihrem Erhitzen bis auf 140 °C besitzt, wobei der matte und rauhe Oberflächeneffekt durch das Erhitzen nicht verlorengeht.

Das erfindungsgemässe Verfahren ist gekennzeichnet durch die Kombination der folgenden Verfahrensschritte, nach denen

a) die Folie von der letzten Kalanderwalze mit einer Geschwindigkeit abgenommen wird, die etwa gleich bis höchstens dreimal so gross ist, wie die Geschwindigkeit dieser Walze,

b) die Folie zur Mattierung bei einer Temperatur von 170 bis 220°C über mindestens eine Mattierungswalze mit einem nach DIN 4768 gemessenen Rauhigkeitswert $R_a$ von 2 bis 5 μ und $R_z$ von 15 bis 40 μ geführt wird, wobei als Mattierungswalzen mindestens eine der beiden letzten Kalanderwalzen und/oder mindestens eine dem Kalander nachgeschaltete Walze genommen wird, und

c) die mattierte Folie bei einer Temperatur von 90 bis 130°C und einem Verhältnis von 1:1,3 bis 1:4 querverstreckt wird.

Nach einem erfindungsgemäss bevorzugten Verfahren wird die Folie durch die folgenden (in der angegebenen Reihenfolge kombinierten) Verfahrensschritte hergestellt:

a) Die (aus den beschriebenen Formmassen kalandrierte) Folie wird von der letzten Kalanderwalze mit einer Geschwindigkeit abgenommen, die etwa gleich bis höchstens zweimal so gross ist wie die Geschwindigkeit dieser Walze,

b) die Folie wird zur Mattierung bei einer Temperatur von 180 bis 210°C über mindestens eine Mattierungswalze mit einem nach DIN 4768 gemessenen Rauhigkeitswert $R_a$ von 3 bis 4 μ und $R_z$ von 20 bis 30 μ geführt, wobei als Mattierungswalzen mindestens eine der beiden letzten Kalanderwalzen und/oder mindestens eine dem Kalander nachgeschaltete Walze genommen wird, und

c) die mattierte Folie wird bei einer Temperatur von 100 bis 125°C und einem Verhältnis von 1:1,5 bis 1:2,5 querverstreckt.

Es ist bevorzugt, dass die Mattierung der Folie an den beiden letzten Kalanderwalzen oder an den beiden letzten Kalanderwalzen und an einem dem Kalander nachgeschalteten Prägewerk, bestehend aus einer Mattierungswalze und einem Presseur, vorgenommen wird.

Die Dicke der nach dem erfindungsgemässen Verfahren erhaltenen Folien beträgt in der Regel 0,02 bis 0,3 mm, vorzugsweise 0,04 bis 0,1 mm.

Unter Vinylchloridpolymerisat oder Polyvinylchlorid werden sowohl Homopolymerisate des Vinylchlorids als auch Mischpolymerisate wie Co- und Pfropfpolymerisate des Vinylchlorids verstanden, die nach den bekannten kontinuierlichen oder Chargen-Polymerisationsverfahren hergestellt werden, beispielsweise nach dem Emulsions-, Suspensions- und Masse-Polymerisationsverfahren.

In den Co- und Pfropfpolymerisaten des Vinylchlorids beträgt der Gehalt an polymerisiertem Vinylchlorid in der Regel mindestens 50 Gew.-%, vorzugsweise mindestens 85 Gew.-%, bezogen auf das Polymerisat.

Zur Copolymerisation von Vinylchlorid sind beispielsweise folgende Monomere geeignet:

Olefine wie Ethylen und Propylen; Vinylester von Carbonsäuren wie Vinylacetat und Vinylpropionat; Acrylnitril; Styrol; und Cyclohexylmaleinimid.

Zur Pfropfpolymerisation können beispielsweise elastomere Polymerisate aus Butadien, Ethylen, Propylen, Styrol und/oder Acrylnitril verwendet werden.

Bevorzugte Polyvinylchloride sind Homopolymerisate des Vinylchlorids und seine Copolymerisate und Pfropfpolymerisate mit einem Gehalt von mindestens 85 Gew.-% an polymerisiertem Vinylchlorid.

Die K-Werte (DIN 53726) der Polyvinylchloride betragen zweckmässigerweise 50 bis 80, vorzugsweise 55 bis 65.

Die Polyvinylchloride enthalten in der Regel die üblichen, für die Verarbeitung von Vinylchloridpolymerisaten vorteilhaften Hilfsstoffe, vorzugsweise Wärmestabilisatoren und Gleitmittel. Sie können auch noch besondere Additive, vorzugsweise Schlagzäh-Modifizierungsmittel, Fliesshilfsmittel (processing aids) und geringe Mengen an Füllstoffen und Farbstoffen enthalten.

Als Wärmestabilisatoren werden vorzugsweise Organozinn-Schwefel-Verbindungen, Harnstoff- und Thioharnstoff-Derivate, Salze der Alkalimetalle sowie von Zink mit aliphatischen Carbonsäuren oder Oxycarbonsäuren, gegebenenfalls gemeinsam mit Costabilisatoren wie epoxidiertem Sojabohnenöl und Phosphiten, eingesetzt. Organozinn-Schwefel-Verbindungen wie Dimethylzinn-bis-2-ethyl-hexylthioglykolat, Di-n-butylzinn-bis-2-ethylhexylthioglykolat und Di-n-octylzinn-bis-2-ethylhexylthioglykolat sind bevorzugt. Die Menge an Stabilisator beträgt im allgemeinen 0,5 bis 3 Gew.-%, vorzugsweise 0,7 bis 2 Gew.-%, bezogen auf das Polyvinylchlorid.

Als Gleitmittel werden vorzugsweise eingesetzt 1,3-Butandiolmontansäureester gekälkt, so dass etwa 40 Gew.-% der zur Kälkung eingesetzten Montansäure als Calciumsalz vorliegen (Wachs OP), 1,3-Butandiolmontansäureester (Wachs E), Bis-stearylethylendiamin (Wachs C), Stearinsäure und/oder Fettsäureester des Glycerins. Die Menge an Gleitmittel beträgt im allgemeinen 0,5 bis 3 Gew.-%, vorzugsweise 0,5 bis 2 Gew.-%, bezogen auf das Polyvinylchlorid.

Als Schlagzäh-Modifizierungsmittel werden vorzugsweise Acrylnitril-Butadien-Styrol (ABS)-Harze, Methylmethacrylat-Acrylnitril-Butadien-Styrol (MABS)-Harze, Methylmethacrylat-Butadien-Styrol (MBS)-Harze, Copolymerisate aus Ethylen und Vinylacetat, und/oder chloriertes Polyethylen verwendet. Die Menge an Schlagzäh-Modifizierungsmittel beträgt im allgemeinen 2 bis 20 Gew.-%, vorzugsweise 5 bis 15 Gew.-%, bezogen auf das Polyvinylchlorid.

Als Fliesshilfsmittel werden vorzugsweise Polymethylmethacrylate und als Fliesshilfsmittel übliche MBS-Harze in einer Menge von 0,5 bis 5 Gew.-%, bezogen auf das Polyvinylchlorid, eingesetzt.

Als Farbstoffe eignen sich alle jene, die zum Färben von Polyvinylchloridfolien üblicherweise eingesetzt werden. Die Menge an Farbstoff beträgt im allgemeinen 0,01 bis 5 Gew.-%, bezogen auf das Polyvinylchlorid. Soll die Mattigkeit der Folie besonders stark hervortreten, ist es zweckmässig, der Formmasse zur Herstellung der Folie solche Füllstoffe zuzusetzen, die zu matten und rauhen Polyvinylchloridfolien führen. Als Füllstoffe werden daher vorzugsweise Calciumcarbonat (Kreide), Magnesiumsilicat (Talkum), Aluminiumsilicat (Kaolin), Bariumsulfat (Schwerspat) und natürliche oder synthetische Silica eingesetzt. Besonders bevorzugt sind Kreide und Kaolin. Der mittlere Teilchendurchmesser der Füllstoffe beträgt 0,5 bis 15 μ, vorzugsweise 2 bis 10 μ. Die Menge an Füllstoff beträgt im allgemeinen 0,1 bis 10 Gew.-%, vorzugsweise 0,5 bis 5 Gew.-%, bezogen auf das Polyvinylchlorid. Die Folien sind vorzugsweise frei von Füllstoffen.

Im Prinzip können die Folien auch geringe Mengen von für Polyvinylchlorid üblichen primären und/oder sekundären Weichmachern enthalten, bevorzugt sind sie jedoch weichmacherfrei.

Die Verarbeitung der beschriebenen Formmassen zu Folien erfolgt durch Kalandrierung auf einem Kalander mit mindestens drei Walzen, vorzugsweise vier bis fünf Walzen. Sie kann nach dem bekannten Hochtemperaturverfahren (Rollknet-Kalandrierung) oder Niedertemperaturverfahren (Bröselknet-Kalandrierung) durchgeführt werden.

Die beschriebenen Formmassen werden vorzugsweise nach dem bekannten Hochtemperaturverfahren kalandriert. Danach werden die einzelnen Komponenten zunächst miteinander vermischt, beispielsweise in einem üblichen Schnellmischer. Die Mischung wird dann auf mindestens einem Walzwerk und/oder in einem Kneter vorgeliert und auf dem Kalander bei den Walzentemperaturen von 170 bis 220 °C, vorzugsweise 180 bis 210 °C, zu einer Folie kalandriert. Die kalandrierte Folie wird von der letzten Kalanderwalze mit einer Geschwindigkeit abgenommen (abgezogen), die etwa gleich bis höchstens dreimal, vorzugsweise bis höchstens zweimal so gross ist, wie die Geschwindigkeit der letzten Kalanderwalze.

Die Mattierung (Prägung) der Folie erfolgt mit Hilfe von einer oder mehreren mittleren Metallwalzen (Prägewalzen), die jeweils die oben angegebenen Rauhigkeitswerte besitzen.

Die Mattierung von Metallwalzen, die vorzugsweise Stahlwalzen sind, wird bekanntlich im allgemeinen durch Strahlen mit Sand (zum Beispiel mit Aluminiumoxid-Körnern) von entsprechender Korngrösse erreicht.

Die Mattierung der Folie mit Hilfe der erfindungsgemäss zu verwendenden Mattierungswalzen (Prägewalzen) wird nach an sich bekannten Verfahren durchgeführt. Sie kann am Kalander selbst (das ist während des Kalandrierens), mit einem dem Kalander nachgeschalteten Prägewerk oder am Kalander (Grundprägung) und an einem Prägewerk (Nachprägung) vorgenommen werden. Sie wird vorzugsweise am Kalander oder am Kalander und an einem nachgeschalteten Prägewerk durchgeführt.

Die Prägung am Kalander wird dadurch erreicht, dass die letzte oder vorzugsweise die beiden letzten Kalanderwalzen mattiert sind, das heisst als Mattierungswalzen ausgebildet sind.

Beim Lauf der aus der Formmasse ausgewalzten Folie über die mattierten Kalanderwalzen wird ihr Prägemuster auf die Folie, die ebenfalls eine Temperatur von 170 bis 220 °C, vorzugsweise 180 bis 210 °C, besitzt, übertragen. Die so durch Kalandrieren und gleichzeitiges Prägen erhaltene Folie zeigt die angegebenen Rauhigkeits- und Glanzwerte.

Zur Prägung auf einem dem Kalander nachgeschalteten (eigenen) Prägewerk wird zweckmässigerweise eine aus der deutschen Offenlegungsschrift 2 833 982 bekannte Prägeeinrichtung eingesetzt, die im wesentlichen aus vorzugsweise einer Prägewalze mit den oben angegebenen Rauhigkeitswerten und einer Gegenwalze (Presseur) besteht. Dabei wird die kalandrierte Polyvinylchlorid-Folie (die am Kalander bereits die Grundprägung erhalten hat oder noch ungeprägt ist) bei einer Temperatur von 170 bis 220 °C, vorzugsweise 180 bis 210 °C, mit einer Geschwindigkeit von 5 bis 100 m/min, vorzugsweise 30 bis 60 m/min, und einem Prägedruck von 100 bis 500 N/cm, vorzugsweise 250 bis 400 N/cm, durch den Spalt von Prägewalze und Presseur geführt. Die Prägewalze wird durch Erhitzen auf Folientemperatur und der Presseur durch Kühlung auf eine Temperatur von bis zu höchstens 130 °C gehalten.

Die nach dem erfindungsgemässen Verfahren erhaltene Polyvinylchlorid-Folie kann einseitig oder beidseitig geprägt sein. Vorzugsweise ist sie einseitig geprägt.

Die Verstreckung der geprägten Folie in Querrichtung (das ist quer zur Maschinenrichtung oder Laufrichtung der Folie bei ihrer Herstellung) wird auf den hierzu bekannten Vorrichtungen durchgeführt. Solche Vorrichtungen sind beispielsweise in den deutschen Patentschriften 1 504 242, 2 024 308 und 2 434 726 beschrieben.

Die Querverstreckung erfolgt vorzugsweise gemäss der in der deutschen Patentschrift 2 434 726 beschriebenen Vorrichtung und Arbeitsweise. Analog dazu wird die Folie mit Hilfe eines sogenannten Breitstreckrahmens bei einer Temperatur von 90 bis 130 °C, vorzugsweise 100 bis 125 °C, mit einem Querstreckverhältnis von 1:1,3 bis 1:4, vorzugsweise 1:1,5 bis 1:2,5, querverstreckt, wobei während der Querverstreckung die Folienbahn um 0,5 bis 15 °C, vorzugsweise 2 bis 10 °C, abgekühlt wird. Der Breitstreckrahmen (Spannrahmen) besteht aus zwei Profilschienen, die zwischen sich eine längsachsenparallele, schmale Laufstrecke (Einlaufstrecke), eine daran anschliessende trapezförmig sich erweiternde Laufstrecke (Reckzone) und anschliessend eine längsachsenparallele, breitere Laufstrecke (Auslaufstrecke) für die Folienbahn einschliessen. Im einzelnen erfolgt die Querverstreckung in der Weise, dass die Folienbahn in der Einlaufstrecke auf eine Temperatur von 90 bis 130 °C, vorzugsweise 100 bis 125 °C, erhitzt wird. Das Erhitzen geschieht zweckmässigerweise durch Infrarotstrahler, durch ein entsprechend vorgeheiztes Gas, beispielsweise durch vorgeheizte Luft und/oder dadurch, dass die Folienbahn über eine oder mehrere entsprechend erhitzte Walzen geführt wird. Die Temperatur der Folienbahn kann beispielsweise mit Hilfe eines Infrarot-Thermometers geprüft werden. In der Querreckzone wird die Folie unter Einhaltung eines Verstreckungsverhält-

nisses von 1:1,3 bis 1:4, vorzugsweise von 1:1,5 bis 1:2,5, querverstreckt. Während der Querverstreckung wird die Folienbahn um 0,5 bis 15°C, vorzugsweise um 2 bis 10°C, abgekühlt. Das Abkühlen der Folie um diese Temperaturen erfolgt beispielsweise dadurch, dass die Folienbahn während der Querverstreckung durch Abstrahlung und Konvektion eine entsprechende Wärmemenge verliert. Sie kann auch in der Weise gesteuert werden, dass die Folienbahn mit einem Gas, beispielsweise mit Luft, angeblasen wird, das eine entsprechend niedrigere Temperatur als die in der Einlaufstrecke aufgeheizte Folienbahn besitzt. Die querverstreckte Folie läuft nun durch die Auslaufstrecke, in der sie mittels eines Gases, beispielsweise Luft, Kühlwalzen und/oder durch Abstrahlung zum Aufwickeln abgekühlt wird.

Das erfindungsgemässe Verfahren setzt sich aus einzelnen, an sich zwar bekannten Verfahrensschritten zusammen, die jedoch mit den ausgewählten Verfahrensmassnahmen und in der vorliegenden Kombination überraschenderweise zur angestrebten Folie führen. Beim erfindungsgemässen Verfahren wird zuerst mattiert und die mattierte Folie breitgestreckt, während bei den bekannten Verfahren zur Herstellung von gestreckten und geprägten Folien zuerst gestreckt (und zwar im allgemeinen sowohl längs- als auch querverstreckt) und dann geprägt wird. Da beim erfindungsgemässen Verfahren das Strecken nach dem Mattieren durchgeführt wird, war also nicht zu erwarten, dass eine Folie mit einer relativ hohen Mattigkeit und Rauhigkeit erhalten wird, zumal in der deutschen Auslegeschrift 1 504 522 und in der deutschen Patentschrift 2 434 726 noch besonders hervorgehoben wird, dass durch das Strecken von thermoplastischen Kunststoff-Folien immer glänzende und glatte Oberflächen erhalten werden. Die nach dem erfindungsgemässen Verfahren hergestellte, mattierte und im wesentlichen nur breitgestreckte Folie besitzt eine spezielle Kombination von optischen und physikalischen Eigenschaften. Sie weist eine bestimmte matte und rauhe Oberfläche auf und besitzt gleichzeitig einen hohen Hitzeschrumpf (Massänderung) in Querrichtung, aber keinen nennenswerten Hitzeschrumpf in Längsrichtung. Sie ist auch beschriftbar und gut bedruckbar, beispielsweise mit Mehrfarbendrucken. Aufgrund all dieser Eigenschaften wird sie besonders vorteilhaft für die eingangs genannten speziellen Zwecke verwendet.

Die Erfindung wird nun an Beispielen noch näher erläutert.

Beispiel 1
Eine Formmasse aus
100 Gewichtsteilen Vinylchlorid-Homopolymerisat mit einem K-Wert von 55,
1,5 Gewichtsteilen Wärmestabilisator und
0,7 Gewichtsteilen Gleitmittel
wurde in bekannter und üblicher Weise in einem Schnellmischer hergestellt, auf einem Walzwerk vorgeliert und auf einem 4-Walzenkalander bei einer Temperatur von 180 bis 210°C zu einer Folie kalandriert.

Die beiden letzten Kalanderwalzen waren mattierte Walzen und besassen jeweils die nach DIN 4768 gemessenen Rauhigkeitswerte $R_a = 3,0 \mu$ und $R_z = 20 \mu$.

Die während des Laufes über die beiden letzten Kalanderwalzen mattierte Folie wurde von der letzten Kalanderwalze mit der 1,5fachen Geschwindigkeit, bezogen auf die Geschwindigkeit der letzten Kalanderwalze, abgezogen.

Die kalandrierte und mattierte Folie wurde nun mit Hilfe eines Breitstreckrahmens analog zum Verfahren der deutschen Patentschrift 2 434 726 bei einer Temperatur von 125°C und einem Streckverhältnis von 1:1,6 querverstreckt, wobei während des Verstreckens die Temperatur der Folie um 5°C verringert wurde.

Die so erhaltene Folie war 80 $\mu$ dick, zeigte ein gleichmässig mattes Aussehen und besass die folgenden Eigenschaften an Rauhigkeit, Glanz und Quer- und Längsschrumpf: Rauhigkeitswerte $R_a$ und $R_z$ nach DIN 4768: $R_a = 2,5 \mu$, $R_z = 12 \mu$.
Glanzwert (Reflektometerwert) nach DIN 67530 bei einem Einstrahlwinkel von 85°: 20%;
Querschrumpf (Massänderung quer) bei 140°C, 15 Minuten lang, nach DIN 53 377: $-35\%$;
Längsschrumpf (Massänderung längs) bei 140°C, 15 Minuten lang, nach DIN 53 377: $-4\%$.

Beispiel 2
Eine Formmasse aus
100 Gewichtsteilen Vinylchlorid-Homopolymerisat mit einem K-Wert von 55,
10 Gewichtsteilen eines Methylmethacrylat-Butadien-Styrol-Polymeren als Schlagzähmodifizierungsmittel,
1,5 Gewichtsteilen Wärmestabilisator und
1,0 Gewichtsteilen Gleitmittel
wurde in bekannter und üblicher Weise in einem Schnellmischer hergestellt, in einem Kneter vorgeliert und auf einem 4-Walzenkalander bei einer Temperatur von 185 bis 210°C zu einer Folie kalandriert.

Die letzte Kalanderwalze war eine mattierte Walze mit den Rauhigkeitswerten $R_a = 3,0 \mu$ und $R_z = 20 \mu$ (gemessen nach DIN 4768).

Die während des Laufes über die letzte Kalanderwalze mattierte Folie wurde von dieser Walze mit der 1,8fachen Geschwindigkeit abgezogen.

Die kalandrierte und mattierte Folie wurde nun mit Hilfe eines Breitstreckrahmens analog zum Verfahren der deutschen Patentschrift 2 434 726 bei einer Temperatur von 120°C und einem Streckverhältnis von 1:2,5 querverstreckt, wobei die Folie während des Verstreckens um 10°C abgekühlt wurde.

Die so erhaltene Folie war 50 $\mu$ dick, zeigte ein gleichmässig mattes Aussehen und besass die folgenden Eigenschaften an Rauhigkeit, Glanz und Quer- und Längsschrumpf: Rauhigkeitswerte $R_a$ und $R_z$ nach DIN 4768: $R_a = 1,3 \mu$, $R_z = 8 \mu$;
Glanzwert nach DIN 67 530 bei einem Einstrahlwinkel von 85°: 40%;

Querschrumpf bei 140°C, 15 Minuten lang nach DIN 53 377: −55%;

Längsschrumpf bei 140°C, 15 Minuten lang, nach DIN 53 377: −5%.

Beispiel 3

Eine Formmasse aus

100    Gewichtsteilen eines Vinylchlorid-Homopolymerisates mit einem K-Wert von 58,

1,5    Gewichtsteilen Wärmestabilisator und

0,7    Gewichtsteilen Gleitmittel wurde in bekannter und üblicher Weise in einem Schnellmischer hergestellt, in einem Kneter vorgeliert und auf einem 4-Walzenkalander bei einer Temperatur von 185 bis 210°C zu einer Folie kalandriert.

Die beiden letzten Kalanderwalzen waren mattierte Walzen und besassen jeweils die nach DIN 4768 gemessenen Rauhigkeitswerte $R_a = 3,5 \mu$ und $R_z = 25 \mu$.

Die während des Laufes über die beiden letzten Kalanderwalzen mattierte Folie wurde von der letzten Walze mit der 2fachen Geschwindigkeit abgezogen.

Die kalandrierte und mattierte Folie wurde nun im üblichen Breitstreckrahmen bei einer Folientemperatur von 115°C und einem Streckverhältnis von 1:2 querverstreckt.

Die so erhaltene Folie war 75 $\mu$ dick, zeigte ein gleichmässig mattes Aussehen und besass die folgenden Eigenschaften an Rauhigkeit, Glanz und Quer- und Längsschrumpf: Rauhigkeitswerte $R_a$ und $R_z$ nach DIN 4768: $R_a = 2,0 \mu$, $R_z = 10 \mu$;

Glanzwert nach DIN 67 530 bei einem Einstrahlwinkel von 85°: 30%;

Querschrumpf bei 140°C, 15 Minuten lang nach DIN 53 377: −50%;

Längsschrumpf bei 140°C, 15 Minuten lang, nach DIN 53 377: −6%.

Beispiel 4

Eine Formmasse aus

100    Gewichtsteilen Vinylchlorid-Copolymerisat mit 10 Gew.-%, bezogen auf das Copolymerisat, an Vinylacetat, mit einem K-Wert von 60,

15    Gewichtsteilen eines Acrylnitril-Butadien-Styrol-Polymeren als Schlagzähmodifizierungsmittel,

1,5    Gewichtsteilen Wärmestabilisator und

1,2    Gewichtsteilen Gleitmittel ·

wurde in bekannter und üblicher Weise in einem Schnellmischer hergestellt, auf einem Walzwerk vorgeliert und auf einem 4-Walzkalander bei einer Temperatur von 175 bis 200°C zu einer Folie kalandriert. Die letzte Kalanderwalze war eine mattierte Walze mit den Rauhigkeitswerten $R_a = 3,0 \mu$ und $R_z = 20 \mu$ (gemessen nach DIN 4768).

Die Folie wurde von der letzten Kalanderwalze mit der 3fachen Geschwindigkeit, bezogen auf die Geschwindigkeit dieser Walze, abgezogen.

Die vom Kalander abgezogene Folie wurde über übliche Umlenkwalzen einem nach dem Kalander aufgestellten Prägewerk zugeführt. Das Prägewerk bestand aus einer Prägewalze mit den Rauhigkeitswerten $R_a = 2,5 \mu$ und $R_z = 20 \mu$ (gemessen nach DIN 4768) und einem Presseur. Die Prägung erfolgte analog zum Verfahren der deutschen Offenlegungsschrift 2 833 982. Die Folie wurde mit einer Geschwindigkeit von 50 m/min und bei einer Temperatur von 180°C ohne Umschlingung der Prägewalze und des Presseurs (Gummiwalze) durch den Prägespalt geführt und bei einem Prägedruck von 300 N/cm geprägt. Die Prägewalze war auf eine Temperatur von 180°C erhitzt und der Presseur wurde mit Kühlwasser gekühlt.

Die Querverstreckung der geprägten Folie erfolgte im üblichen Breitstreckrahmen bei einer Folientemperatur von 95°C und einem Streckverhältnis von 1:4.

Die so erhaltene Folie war 40 $\mu$ dick, zeigte ein gleichmässig mattes Aussehen und besass die folgenden Eigenschaften an Rauhigkeit, Glanz und Quer- und Längsschrumpf: Rauhigkeitswerte $R_a$ und $R_z$ nach DIN 4768: $R_a = 1,1 \mu$, $R_z = 6 \mu$;

Glanzwert nach DIN 67 530 bei einem Einstrahlwinkel von 85°: 50%;

Querschrumpf bei 140°C, 15 Minuten lang nach DIN 53 377: −75%;

Längsschrumpf bei 140°C, 15 Minuten lang nach DIN 53 377: −8%.

Beispiel 5

Eine Formmasse bestehend aus

100    Gewichtsteilen Vinylchlorid-Homopolymerisat mit einem K-Wert von 60,

5,0    Gewichtsteilen Titandioxid,

1,5    Gewichtsteilen Wärmestabilisator und

0,7    Gewichtsteilen Gleitmittel wurde wie in Beispiel 3 kalandriert, geprägt und gestreckt, wobei die Kalanderwalzen eine Temperatur von 185 bis 210°C hatten, die mattierten Kalanderwalzen den $R_a$-Wert 4,0 $\mu$ und den $R_z$-Wert 30 $\mu$ aufwiesen, die Folie von der letzten Kalanderwalze mit der 1,3fachen Geschwindigkeit abgezogen wurde und die Querverstreckung der mattierten Folie bei einer Temperatur von 130°C mit dem Streckverhältnis von 1:1,3 durchgeführt wurde.

Die erhaltene Folie war 100 $\mu$ dick, zeigte ein gleichmässig weiss-mattes Aussehen und besass die folgenden Eigenschaften an Rauhigkeit, Glanz und Quer- und Längsschrumpf: Rauhigkeitswerte $R_a$ und $R_z$ nach DIN 4768: $R_a = 3,0 \mu$, $R_z = 15 \mu$;

Glanzwert nach DIN 67 530 bei einem Einstrahlwinkel von 85°: 15%;

Querschrumpf bei 140°C, 15 Minuten lang nach DIN 53 377: −25%;

Längsschrumpf bei 140°C, 15 Minuten lang nach DIN 53 377: −3%.

Beispiel 6

Es wurde vorgegangen wie in Beispiel 4 mit dem Unterschied, dass die Prägewalze des Prägewerkes die Rauhigkeitswerte $R_a = 2 \mu$ und $R_z = 15 \mu$ besass.

Die erhaltene Folie war 40 $\mu$ dick, zeigte ein gleichmässig mattes (seitenmattes) Aussehen und wies die folgenden Eigenschaften an Rauhigkeit, Glanz und Quer- und Längsschrumpf auf:

Rauhigkeitswerte $R_a$ und $R_z$ nach DIN 4768: $R_a = 1\,\mu$, $R_z = 5\,\mu$;

Glanzwert nach DIN 67 530 bei einem Einstrahlwinkel von 85°: 70%;

Querschrumpf bei 140°C, 15 Minuten lang nach DIN 53 377: −75%;

Längsschrumpf bei 140°C, 15 Minuten lang nach DIN 53 377: −8%.

## Patentansprüche

1. Verfahren zur Herstellung einer Polyvinylchlorid-Folie mit speziellen Eigenschaften, bei dem von einer im wesentlichen aus Vinylchlorid-Polymerisat, Gleitmittel und Stabilisator bestehenden Formmasse eine mit Hilfe eines aus mindestens drei Walzen bestehenden Kalanders kalandrierte, gestreckte und mit einer oder mehreren Mattierungswalzen mattierte Folie hergestellt wird, gekennzeichnet durch die Kombination der folgenden Verfahrensschritte, nach denen

a) die Folie von der letzten Kalanderwalze mit einer Geschwindigkeit abgenommen wird, die etwa gleich bis höchstens dreimal so gross ist wie die Geschwindigkeit dieser Walze,

b) die Folie zur Mattierung bei einer Temperatur von 170 bis 220°C über mindestens eine Mattierungswalze mit einem nach DIN 4768 gemessenen Rauhigkeitswert $R_a$ von 2 bis 5 $\mu$ und $R_z$ von 15 bis 40 $\mu$ geführt wird, wobei als Mattierungswalzen mindestens eine der beiden letzten Kalanderwalzen und/oder mindestens eine dem Kalander nachgeschaltete Walze genommen wird, und

c) die mattierte Folie bei einer Temperatur von 90 bis 130°C und einem Verhältnis von 1:1,3 bis 1:4 querverstreckt wird.

2. Verfahren nach Anspruch 1, dadurch gekennzeichnet, dass

a) die Folie von der letzten Kalanderwalze mit einer Geschwindigkeit abgenommen wird, die etwa gleich bis höchstens zweimal so gross ist wie die Geschwindigkeit dieser Walze,

b) die Folie zur Mattierung bei einer Temperatur von 180 bis 210°C über mindestens eine Mattierungswalze mit einem nach DIN 4768 gemessenen Rauhigkeitswert $R_a$ von 3 bis 4 $\mu$ und $R_z$ von 20 bis 30 $\mu$ geführt wird, wobei als Mattierungswalzen mindestens eine der beiden letzten Kalanderwalzen und/oder mindestens eine dem Kalander nachgeschaltete Walze genommen wird, und

c) die mattierte Folie bei einer Temperatur von 100 bis 125°C und einem Verhältnis von 1:1,5 bis 1:2,5 querverstreckt wird.

3. Verfahren nach einem der Ansprüche 1 oder 2, dadurch gekennzeichnet, dass die Mattierung der Folie an den beiden letzten Kalanderwalzen vorgenommen wird.

4. Verfahren nach einem der Ansprüche 1 bis 3, dadurch gekennzeichnet, dass die Mattierung der Folie an den beiden letzten Kalanderwalzen und an einem dem Kalander nachgeschalteten Prägewerk, bestehend aus einer Mattierungswalze und einem Presseur, vorgenommen wird.

## Claims

1. A process for manufacturing a polyvinyl chloride film having special properties in which, starting from a molding composition consisting essentially of a vinyl chloride polymer, lubricant and stabilizer, a film is manufactured which has been calendered with the aid of a calender having at least three rolls, stretched and delustered with one or more delustering rolls, comprising the combination of the following process steps in which

a) the film is taken off the final calender roll with a rate which is approximately equal to up to at most three times as great as the speed of this roll,

b) the film, for delustering, is passed at a temperature of 170 to 220°C over at least one delustering roll having roughness values measured in accordance with DIN 4768 of $R_a$ of 2 to 5 $\mu$ and of $R_z$ of 15 to 40 $\mu$, the delustering rolls used being at least one of the two final calender rolls and/or at least one roll downstream of the calender, and

c) the delustered film is transversely stretched at a temperature of 90 to 130°C and a ratio of 1:1.3 to 1:4.

2. The process as claimed in claim 1, wherein

a) the film is taken off the final calender roll at a speed which is approximately equal to up to at most twice as great as the speed of this roll,

b) the film, for delustering, is passed at a temperature of 180 to 210°C over at least one delustering roll having roughness values measured in accordance with DIN 4,768 of $R_a$ of 3 to 4 $\mu$ and of $R_z$ of 20 to 30 $\mu$, the delustering rolls used being at least one of the two final calender rolls and/or at least one roll downstream of the calender, and

c) the delustered film is transversely stretched at a temperature of 100 to 125°C and a ratio of 1:1.5 to 1:2.5.

3. The process as claimed in claim 1 or 2, wherein the film is delustered at the two final calender rolls.

4. The process as claimed in one of the claims 1 to 3, wherein the film is delustered at the two final calender rolls and at an embossing unit which is downstream of the calender and which comprises a delustering roll and a pressure roll.

## Revendications

1. Procédé de fabrication d'une feuille de poly-(chlorure de vinyle) présentant des propriétés particulières, selon lequel on prépare, à partir d'une masse à mouler consistant essentiellement en un polymère de chlorure de vinyle, en un agent lubrifiant et en un stabilisant, une feuille calandrée à l'aide d'une calandre présentant au moins trois cylindres, étirée et rendue mate par un ou plusieurs cylindres de matité, caractérisé par la combinaison des étapes suivantes, selon lesquelles:

a) la feuille est tirée du dernier cylindre de la calandre avec une vitesse comprise entre une valeur sensiblement égale et une valeur au maximum triple de la vitesse de ce cylindre,

b) la feuille, pour l'opération de matité, est envoyée, à une température de 170–220 °C, sur au moins un cylindre de matité qui présente des indices de rugosité, mesurés selon la norme industrielle allemande DIN 4768, de 2 à 5 µm pour $\bar{R}_a$ et de 15 à 40 µm pour $R_z$, les cylindres de matité consistant en au moins l'un des deux derniers cylindres de calandre et/ou au moins un cylindre disposé en aval de la calandre, et

c) la feuille mate est étirée transversalement à une température de 90 à 130 °C et avec un rapport d'étirage de 1:1,3 à 1:4.

2. Procédé selon la revendication 1, caractérisé en ce que:

a) la feuille est tirée du dernier cylindre de calandre à une vitesse qui est comprise entre une valeur sensiblement égale et une valeur au maximum double de la vitesse de ce cylindre,

b) la feuille, pour l'opération de matité, est conduite, à une température de 180 à 210 °C, sur au moins un cylindre de matité, présentant des indices de matité, mesurés selon la norme industrielle allemande DIN 4768, de 3 à 4 µm pour $R_a$ et de 20 à 30 µm pour $R_z$, les cylindres de matité consistant en au moins l'un des deux derniers cylindres de calandre et/ou au moins un cylindre disposé en aval de la calandre, et,

c) la feuille mate subit un étirage transversal à une température de 100 à 125 °C et avec un rapport d'étirage de 1:1,5 à 1:2,5.

3. Procédé selon l'une des revendications 1 et 2, caractérisé en ce que l'opération de matité de la feuille est effectuée sur les deux derniers cylindres de calandre.

4. Procédé selon l'une quelconque des revendications 1 à 3, caractérisé en ce que l'opération de matité de la feuille est effectuée sur les deux derniers cylindres de calandre, et sur une machine de grainage disposée en aval de la calandre, cette machine consistant en un cylindre de matité et en un cylindre presseur.